# EUROPÄISCHE PATENTSCHRIFT

(11) **EP 4 015 864 B1**
(45) Veröffentlichungstag und Bekanntmachung des Hinweises auf die Patenterteilung: **01.07.2026**
(21) Anmeldenummer: 21205173.4
(22) Anmeldetag: 28.10.2021
(51) Int. Cl.: F16F 1/38, B60K 5/12

(54) **LAGER, VORZUGSWEISE MOTORLAGER ODER GETRIEBELAGER**
BEARING, PREFERABLY MOTOR BEARING OR GEARBOX BEARING
PALIER, DE PRÉFÉRENCE PALIER DE MOTEUR OU PALIER DE BOITE DE VITESSE

(30) Priorität: 21.12.2020 DE 102020216384
(43) Veröffentlichungstag der Anmeldung: 22.06.2022
(73) Patentinhaber: ContiTech Vibration Control GmbH, 30175 Hannover (DE)
(72) Erfinder: Seifert, Felix, 30165 Hannover (DE); Seegers, Carsten, 30165 Hannover (DE)
(74) Vertreter: Bird & Bird LLP - Hamburg

(56) Entgegenhaltungen:
- EP-B1- 1 336 771
- FR-A1- 2 971 459
- US-A- 6 019 342
- US-A1- 2005 167 898
- US-A1- 2019 070 945
- US-B2- 10 337 585

## Beschreibung

Die vorliegende Erfindung betrifft ein Lager, vorzugsweise ein Motorlager oder ein Getriebelager, gemäß dem Oberbegriff des Patentanspruchs 1 sowie ein Fahrzeug, insbesondere ein Kraftfahrzeug, mit einem derartigen Lager gemäß dem Patentanspruch 15.

Zur Schwingungsdämpfung von Lagern werden üblicherweise Elastomerkörper verwendet, die zwischen den Lagerelementen so ausgebildet sind, dass sie die Schwingungen zwischen den Lagerelementen zumindest teilweise dämpfen können. Bei Lagern für Motoren oder auch für Getriebe werden hierzu Halterungselemente zur Befestigung des Motors oder des Getriebes mit einem Elastomerkörper als Dämpfungselement, als Tragkörper oder als Tragfeder in dem Gehäuse angeordnet, welches am Chassis bzw. am Fahrwerk des Fahrzeugs befestigt ist. Derartige Lager können auch als Gummilager bezeichnet werden.

Bei einem Motorlager kann das eine Halterungselement als Innenteil ein sog. Einsteckhalter sein, an welchem der Motor feststehend befestigt wird. Das anderen Halterungselement kann das zuvor gewähnte Gehäuse als Außenteil sein, welches feststehend am Chassis befestigt wird. Zwischen dem Einsteckhalter und dem Gehäuse kann der Elastomerkörper als Tragfeder angeordnet sein, um die statische Kraft des Motors in der Z-Richtung als Richtung der Gewichtskraft aufzunehmen und um Schwingungen in der Z-Richtung zu dämpfen. Im Wesentlichen sind jedoch im Betrieb des Fahrzeugs Schwingungen in der X-Richtung als Hauptschwingungsrichtung senkrecht zur Z-Richtung zu dämpfen, welche der Fahrt- bzw. Bewegungsrichtung des Fahrzeugs entspricht.

Um dabei in der X-Richtung als Hauptschwingungsrichtung besonders hohe Amplituden zusätzlich dämpfen zu können, kann seitens des Einsteckhalters in der X-Richtung beidseitig jeweils ein zusätzlicher Elastomerkörper vorgesehen sein, welcher bei entsprechend hohen Auslenkungen in der X-Richtung zusätzlich mit dem Gehäuse, welches den Einsteckhalter hierzu in der X- und Z-Richtung im Wesentlichen geschlossen umgeben kann, in Kontakt kommen und somit zusätzlich als Anschläge dämpfend wirken können. Somit ergibt sich für derartige Lager über die Kraft der zu dämpfenden Schwingung eine Kennlinie der Steifigkeit des Lagers als Ganzes, bei welcher im unteren Kraftbereich zunächst lediglich die Tragfeder und ab einer konstruktiv vorbestimmbaren Kraft zusätzlich die Anschläge des Einsteckhalters wirken können.

Die DE 10 2012 110 480 A1 beschreibt ein Lager, insbesondere ein Fahrzeuglager, mit einem Innenteil, einem Außenteil, welches das Innenteil umfasst, und einem Elastomerkörper, der das Innenteil und das Außenteil federnd miteinander verbindet. Das Außenteil als Gehäuse weist an seinem oberen Bereich in X-Richtung gesehen eine Aussparung auf, in die ein entsprechendes Hintergriffselement des Innenteils als Einsteckhalter hintergreifend eingeführt ist. Dieses Hintergriffelement kann mit einem Elastomerelement ummantelt sein und dient der Positionierung und Halterung des Einsteckhalters im Gehäuse im Betrieb, d.h. bei der Ausübung von Schwingungen im Wesentlichen in der Hauptschwingungsrichtung X, die im Falle der Umsetzung als Fahrzeuglager im Wesentlichen der Fahrt- bzw. Bewegungsrichtung des Fahrzeugs entspricht.

Die Möglichkeiten, bei derartigen Lagern die Kennlinie zu gestalten und insbesondere möglichst gut an den jeweiligen Anwendungsfall anzupassen, sind beschränkt. Insbesondere ist üblicherweise der Bauraum beschränkt, welcher zur konstruktiven Gestaltung derartiger Lager zur Verfügung steht. Dies gilt insbesondere zum Beispiel für Motorlager oder für Getriebelager, welche in Fahrzeugen eingesetzt werden. In jedem Fall ist üblicherweise das Gewicht derartiger Lager möglichst geringzuhalten, was insbesondere für Fahrzeuge gilt. Ferner können derartige Lager auch eine unzureichende Lebensdauer aufweisen.

Die US 2019/070945 A1 **,** welche die Präambel des Anspruchs 1 zeigt, beschreibt einen Stopperabschnitt mit einem ersten vorstehenden Abschnitt, der von der Endfläche des ersten Befestigungsabschnitts näher an der Außenseite in der Hauptlasteingaberichtung in Richtung der Außenseite in der Hauptlasteingaberichtung vorsteht, und mit einem zweiten vorstehenden Abschnitt, der von der Endfläche des ersten Befestigungsabschnitts näher an der Außenseite in der Hauptlasteingaberichtung in Richtung der Außenseite in der Hauptlasteingaberichtung vorsteht und von dem ersten vorstehenden Abschnitt beabstandet ist, so dass er sich in einem Nicht-Kontaktzustand mit dem ersten vorstehenden Abschnitt befindet, dünner ist als der erste vorstehende Abschnitt in der Hauptlasteingaberichtung und ein vorstehendes Ende aufweist, bei dem ein Abstand zwischen dem vorstehenden Ende und der Kontaktfläche in der Hauptlasteingaberichtung länger ist als ein Abstand zwischen einem vorstehenden Ende des ersten vorstehenden Abschnitts und der Kontaktfläche.

Eine Aufgabe der vorliegenden Erfindung ist es, ein Lager der eingangs beschriebenen Art bereit zu stellen, so dass der Gestaltungsspielraum der Kennlinie der Steifigkeit über der Kraft erhöht werden kann. Dies soll insbesondere möglichst einfach, kompakt, leicht, langlebig und bzw. kostengünstig erfolgen. Dies soll insbesondere für Lager für Fahrzeug, insbesondere für Motorlager oder für Getriebelager, erfolgen. Zumindest soll eine Alternative zu bekannten derartigen Lagern geschaffen werden.

Die Aufgabe wird erfindungsgemäß durch ein Lager mit den Merkmalen gemäß Patentanspruch 1 sowie durch ein Fahrzeug mit den Merkmalen gemäß Patentanspruch 15 gelöst. Vorteilhafte Weiterbildungen sind in den Unteransprüchen beschrieben.

Somit betrifft die vorliegende Erfindung ein Lager, vorzugsweise ein Motorlager oder ein Getriebelager, mit einem ersten Lagerelement und mit einem zweiten Lagerelement, wobei das erste Lagerelementeinen Elastomerkörper aufweist, welcher das erste Lagerelement und das zweite Lagerelement federnd miteinander verbindet, wobei das erste Lagerelement wenigstens in einer Hauptschwingungsrichtung wenigstens einseitig wenigstens ein erstes Anschlagelement aufweist. Wird das erfindungsgemäße Lager dabei als Motorlager oder als Getriebelager in einem Fahrzeug umgesetzt, so entspricht die Hauptschwingungsrichtung vorzugsweise der Fahrtrichtung des Fahrzeugs.

Das erfindungsgemäße Lager ist dadurch gekennzeichnet, dass das erste Lagerelement wenigstens in der Hauptschwingungsrichtung wenigstens einseitig wenigstens ein zweites Anschlagelement aufweist. Mit anderen Worten kann wenigstens einseitig wenigstens ein weiteres zweites Anschlagelement vorgesehen werden. Hierdurch können die Möglichkeiten erhöht werden, die dämpfende Wirkung des Lagers zu gestalten.

Der vorliegenden Erfindung liegt dabei die Erkenntnis zugrunde, dass derartige Anschlagselemente bzw. Anschläge bei einem schwingungsfähigen ersten Lagerelement dazu verwendet werden, bei ausreichend starken Schwingungen, d.h. bei ausreichend hohen Amplituden der Schwingung, zum Beispiel mit dem zweiten Lagerelement in Kontakt zu kommen. Somit kann eine Kennlinie der Steifigkeit des Lagers über der Kraft wenigstens in der Hauptschwingungsrichtung erreicht werden, bei welcher zunächst die Steifigkeit lediglich aus dem Federelement des Elastomerkörpers resultiert und ab einer vorbestimmten Höhe der Kraft, welche in Abhängigkeit des Anwendungsfalls konstruktiv beeinflusst werden kann, zusätzlich ein Kontakt des wenigstens einen ersten Anschlagelements des ersten Lagerelements erfolgt. Ab dieser Kraft wirken dann der Elastomerkörper und das erste Anschlagelement des ersten Lagerelements parallel miteinander dämpfend, so dass eine höhere resultierende Steifigkeit in diesem Kraftbereich erreicht werden kann.

Erfindungsgemäß wird ein derartiges bekanntes Lager weiterentwickelt, indem wenigstens in der Hauptschwingungsrichtung wenigstens einseitig am ersten Lagerelement wenigstens ein weiteres, zweites Anschlagelement vorgesehen wird, welches ebenfalls wie zuvor beschrieben dämpfend zum Beispiel gegenüber dem zweiten Lagerelement wirken und hierdurch die zuvor beschriebenen Kennlinie der resultierenden Steifigkeit des Lagers über der Kraft beeinflussen kann. Somit kann diese Kennlinie drei Bereiche aufweisen, was die Gestaltungsmöglichkeiten des Lagers weiter erhöhen kann. Insbesondere können hierdurch die Anstiege der Steifigkeit zwischen den Kraftbereichen der Kennlinie geringer ausfallen und detaillierter eingestellt werden, was insbesondere die Lebensdauer des Lagers erhöhen kann. Ferner kann hierdurch das akustische Verhalten des Lagers verbessert werden, was bei einer Umsetzung des erfindungsgemäßen Lagers als Motorlager oder als Getriebelager dem Fahrkomfort der Fahrzeuginsassen zugutekommen kann. Erfindungsgemäss weist das zweite Anschlagelement ein elastomeres Material auf, wobei das zweite Anschlagelement und der Elastomerkörper ein unterschiedliches elastomeres Material aufweisen.

Gemäß einem Aspekt der Erfindung ist das zweite Anschlagelement ausgebildet, in der Hauptschwingungsrichtung vor dem ersten Anschlagelement dämpfend zu wirken. Mit anderen Worten tritt eine dämpfende Wirkung des zweiten Anschlagelements ein, bevor das erste Anschlagelement in Kontakt zum Beispiel mit dem zweiten Lagerelement kommt. Hierdurch kann mittels des zweiten Anschlagelements ein Bereich der zuvor beschriebenen Kennlinie geschaffen werden, welcher zwischen den zuvor beschriebenen bekannten Bereichen der Kennlinie liegt. Dies kann insbesondere den Übergang zwischen den beiden zuvor beschriebenen bekannten Bereichen der Kennlinie glatter, d.h. weniger sprungartig, werden lassen, was insbesondere der Lebensdauer des Lagers zugutekommen kann.

Gemäß einem weiteren Aspekt der Erfindung sind das erste Anschlagelement , das zweite Anschlagelement und der Elastomerkörper ausgebildet, so dass, mit ansteigender Kraft, die Steifigkeit des Lagers
- zuerst nur durch den Elastomerkörper,
- dann durch den Elastomerkörper und durch das zweite Anschlagelement und
- schließlich durch den Elastomerkörper, durch das zweite Anschlagelement und durch das erste Anschlagelement
bestimmt wird. Dies kann eine konkrete Möglichkeit darstellen, die zuvor beschriebene Kennlinie der resultierenden Steifigkeit des Lagers über der Kraft mit drei Bereichen umzusetzen.

Gemäß einem weiteren Aspekt der Erfindung sind das erste Anschlagelement , das zweite Anschlagelement und der Elastomerkörper ausgebildet, so dass, mit ansteigender Kraft, die Steifigkeit des Lagers
- zuerst nur durch den Elastomerkörper,
- dann durch den Elastomerkörper und durch das erste Anschlagelement und
- schließlich durch den Elastomerkörper, durch das erste Anschlagelement und durch das zweite Anschlagelement
bestimmt wird. Dies kann eine alternative konkrete Möglichkeit darstellen, die zuvor beschriebene Kennlinie der resultierenden Steifigkeit des Lagers über der Kraft mit drei Bereichen umzusetzen.

Gemäß einem weiteren Aspekt der Erfindung sind das erste Anschlagelement und das zweite Anschlagelement in der Hauptschwingungsrichtung auf derselben Seite des ersten Lagerelements angeordnet. Hierdurch können beide Anschläge insbesondere in Kombination miteinander bzw. in Reihenfolge nacheinander wirken, wie zuvor beschrieben.

Gemäß einem weiteren Aspekt der Erfindung weist das erste Anschlagelement ein elastomeres Material auf, vorzugsweise besteht aus einem elastomeren Material.

Dies kann eine Umsetzung eines elastisch verformbaren ersten Anschlagelements ermöglichen.

Gemäß einem weiteren Aspekt der Erfindung weist das erste Anschlagelement und der Elastomerkörper ein unterschiedliches elastomeres Material oder das gleiche elastomere Material auf, vorzugsweise bestehen hieraus. Dies kann die Gestaltungsmöglichkeiten eines erfindungsgemäßen Lagers erhöhen. Unterschiedliche elastomere Materialien können beispielsweise in einem zweiKomponenten-Prozess verwendet und hierdurch das erste Anschlagelement und der Elastomerkörper integral hergestellt werden.

Gemäß einem weiteren Aspekt der Erfindung weisen das erste Anschlagelement und der Elastomerkörper eine unterschiedliche oder die gleiche Shore-Härte auf. Dies kann die Gestaltungsmöglichkeiten eines erfindungsgemäßen Lagers erhöhen.

Gemäß einem weiteren Aspekt der Erfindung sind das erste Anschlagelement und der Elastomerkörper einstückig ausgebildet. Mit anderen Worten sind das erste Anschlagelement und der Elastomerkörper integral ausgebildet. Dies kann die Produktion, insbesondere einen Vulkanisationsprozess, vereinfachen und dadurch die Kosten der Herstellung reduzieren.

Gemäß einem weiteren Aspekt der Erfindung besteht das zweite Anschlagelement aus einem elastomeren Material. Dies kann eine Umsetzung eines elastisch verformbaren zweiten Anschlagelements ermöglichen.

Gemäß einem weiteren Aspekt der Erfindung bestehen das zweite Anschlagelement und der Elastomerkörper aus einem unterschiedlichen elastomeren Material. Material Dies kann die Gestaltungsmöglichkeiten eines erfindungsgemäßen Lagers erhöhen.

Unterschiedliche elastomere Materialien können beispielsweise in einem zweiKomponenten-Prozess verwendet und hierdurch das zweite Anschlagelement und der Elastomerkörper integral hergestellt werden.

Gemäß einem weiteren Aspekt der Erfindung weisen das zweite Anschlagelement und der Elastomerkörper eine unterschiedliche oder die gleiche Shore-Härte auf. Dies kann die Gestaltungsmöglichkeiten eines erfindungsgemäßen Lagers erhöhen.

Gemäß einem weiteren Aspekt der Erfindung sind das zweite Anschlagelement und der Elastomerkörper einstückig ausgebildet. Mit anderen Worten sind das zweite Anschlagelement und der Elastomerkörper integral ausgebildet. Dies kann die Produktion, insbesondere einen Vulkanisationsprozess, vereinfachen und dadurch die Kosten der Herstellung reduzieren.

Gemäß einem weiteren Aspekt der Erfindung weisen das erste Anschlagelement und das zweite Anschlagelement ein unterschiedliches elastomeres Material oder das gleiche elastomere Material auf, vorzugsweise bestehen hieraus. Dies kann die Gestaltungsmöglichkeiten eines erfindungsgemäßen Lagers erhöhen. Unterschiedliche elastomere Materialien können beispielsweise in einem zweiKomponenten-Prozess verwendet und hierdurch das erste Anschlagelement und das zweite Anschlagelement integral hergestellt werden.

Gemäß einem weiteren Aspekt der Erfindung weisen das erste Anschlagelement und das zweite Anschlagelement eine unterschiedliche oder die gleiche Shore-Härte auf. Dies kann die Gestaltungsmöglichkeiten eines erfindungsgemäßen Lagers erhöhen.

Gemäß einem weiteren Aspekt der Erfindung sind das erste Anschlagelement und das zweite Anschlagelement einstückig ausgebildet. Mit anderen Worten sind das erste Anschlagelement und das zweite Anschlagelement integral ausgebildet. Dies kann die Produktion, insbesondere einen Vulkanisationsprozess, vereinfachen und dadurch die Kosten der Herstellung reduzieren.

Gemäß einem weiteren Aspekt der Erfindung weist das erste Lagerelement in der Hauptschwingungsrichtung wenigstens beidseitig einander gegenüberliegend wenigstens ein erstes Anschlagelement auf. Hierdurch können die zuvor beschriebenen Eigenschaften und Vorteile am ersten Lagerelement in beide Richtungen umgesetzt werden. Dabei können die beiden ersten Anschlagelemente gleich oder unterschiedlich ausgebildet sein, um die Gestaltungsmöglichkeiten eines erfindungsgemäßen Lagers zu erhöhen.

Gemäß einem weiteren Aspekt der Erfindung weist das erste Lagerelement in der Hauptschwingungsrichtung wenigstens beidseitig einander gegenüberliegend wenigstens ein zweites Anschlagelement auf. Hierdurch können die zuvor beschriebenen Eigenschaften und Vorteile am ersten Lagerelement in beide Richtungen erreicht werden. Dabei können die beiden zweiten Anschlagelemente gleich oder unterschiedlich ausgebildet sein, um die Gestaltungsmöglichkeiten eines erfindungsgemäßen Lagers zu erhöhen.

Gemäß einem weiteren Aspekt der Erfindung ist das erste Lagerelement ein Einsteckhalter, das zweite Lagerelement ein Gehäuse und der Elastomerkörper des ersten Lagerelements eine Tragfeder, welche den Einsteckhalter und das Gehäuse im Wesentlichen in der vertikalen Richtung miteinander verbindet. Hierdurch kann die vorliegende Erfindung auf eine derartiges Lager angewendet werden.

Die vorliegende Erfindung betrifft auch ein Fahrzeug, insbesondere ein Kraftfahrzeug, mit wenigstens einem Lager wie zuvor beschrieben. Hierdurch können die Eigenschaften und Vorteile eines erfindungsgemäßen Lagers bei einem Fahrzeug angewendet und dort genutzt werden.

Ein Ausführungsbeispiel und weitere Vorteile der Erfindung werden nachstehend im Zusammenhang mit den folgenden Figuren erläutert. Darin zeigt:

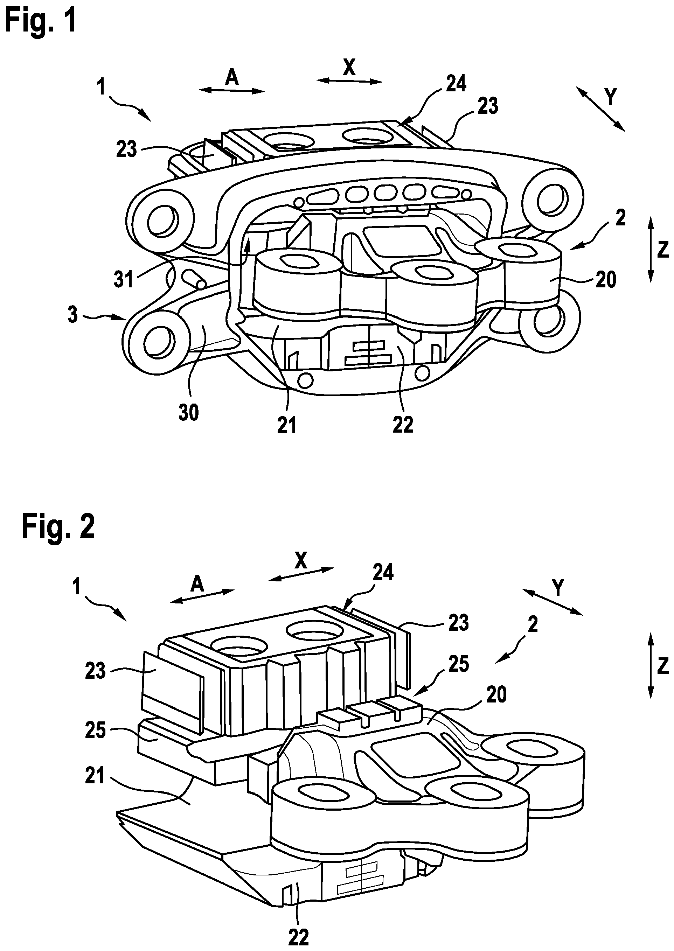

- Fig. 1: eine perspektivische schematische Darstellung eines erfindungsgemäßen Lagers;
- Fig. 2: die Darstellung der Fig. 1 ohne zweites Lagerelement;
- Fig. 3: eine Draufsicht auf den Elastomerkörper des erfindungsgemäßen Lagers; und
- Fig. 4: eine Kennlinie der resultierenden Steifigkeit des erfindungsgemäßen Lagers über der Kraft.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

Es wird ein erfindungsgemäßes Lager 1 am Beispiel eines Getriebelagers 1 betrachtet, wobei ein Motorlagers 1 vergleichbar aufgebaut ist. Das Getriebelager 1 weist ein erstes Lagerelement 2 auf, welches auch als Innenteil 2 oder als Einsteckhalter 2 bezeichnet werden kann. Der Einsteckhalter 2 ist innerhalb eines zweiten Lagerelements 3 angeordnet, welches auch als Außenteil 3 oder als Gehäuse 3 bezeichnet werden kann. Der Einsteckhalter 2 weist einen Elastomerkörper 21 auf, welcher auch als Federelement 21 oder als Tragfeder 21 bezeichnet werden kann. Der Einsteckhalter 2 ist mittels der Tragfeder 21 schwingungsdämpfend mit dem Gehäuse 3 verbunden.

Ein Tragarm 20 des Einsteckhalters 2 kann mittels Schrauben (nicht dargestellt) an einem Motor (nicht dargestellt) feststehend befestigt werden und von dort Schwingungen aufnehmen, welche durch das Getriebelager1 zu dämpfen sind. Der Tragarm 20 ist stoffschlüssig durch Vulkanisation mit der Tragfeder 3 verbunden. Die Tragfeder 3 ist ferner stoffschlüssig durch Vulkanisation mit einem Stützkörper 22 des Einsteckhalters 2 verbunden. Der Stützkörper 22 ist kraftschlüssig und bzw. oder formschlüssig mittels mechanischer Verbindungselemente mit einem Lagerkörper 30 des Gehäuses 3, welcher auch als Gehäusekörper 30 bezeichnet werden kann, verbunden. Der Tragarm 21 erstreckt sich dabei in der Querrichtung Y durch eine Durchgangsöffnung 31 des Gehäuses 3 in das Gehäuse 3 hinein. Das Gehäuse 3 ist mittels Schrauben (nicht dargestellt) an einem Chassis (nicht dargestellt) eines Fahrzeugs (nicht dargestellt) feststehend befestigt.

In der vertikalen Richtung Z nimmt die Tragfeder 21 die statische Kraft des Einsteckhalters 2 samt Motor anteilig oder vollständig auf, je nachdem, ob lediglich ein Getriebelager1 oder mehrere Getriebelager1 verwendet werden. Auch können von der Tragfeder 3 Schwingungen in der vertikalen Richtung Z gedämpft werden.

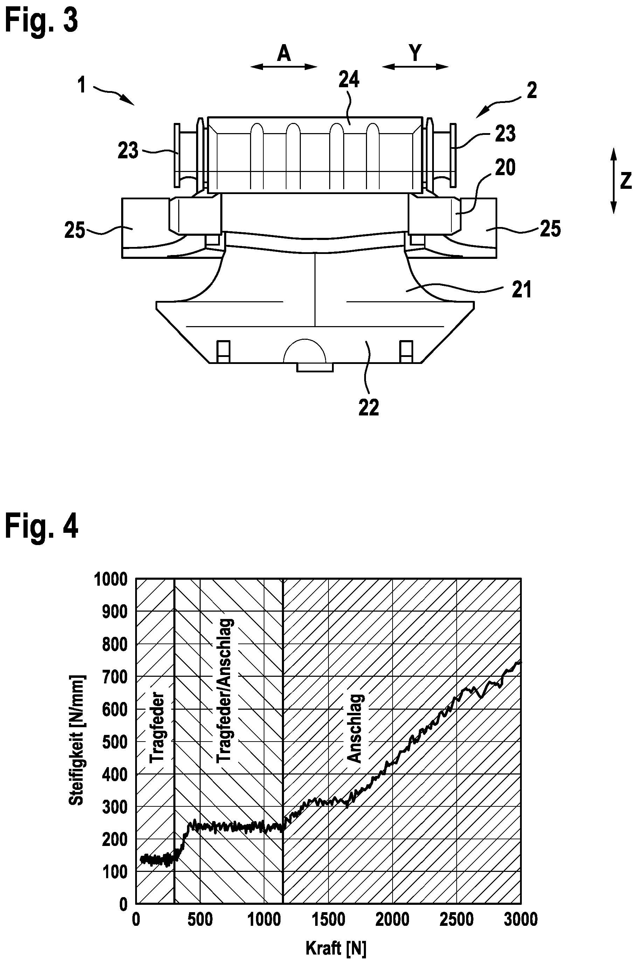

Hinsichtlich des Dämpfens von Schwingungen treten jedoch die wesentlichen Schwingungen im Betrieb in der Längsrichtung X als Hauptschwingungsrichtung A auf. Diese können in einem gewissen Maße ebenfalls von der Tragfeder 21 alleinig gedämpft werden. Dies erfolgt mit einer im Wesentlichen konstanten Steifigkeit des Getriebelagers1 in einem unteren Bereich der Kräfte der Schwingungen, welcher beispielsweise bis ca. 300 N reicht, siehe Figur 4.

Um ab dieser Kraft die Steifigkeit des Getriebelagers1 als Ganzes zu erhöhen wird erfindungsgemäß durch den Einsteckhalter 2 ein Paar von zweiten Anschlagelementen 25 ausgebildet, welche einander gegenüberliegend in der Längsrichtung X angeordnet sind. Die beiden zweiten Anschlagselemente 25 sind dabei einstückig, d.h. integral, mit der Tragfeder 21 ausgebildet, weisen jedoch ein anderes Elastomermaterial als die Tragfeder 21 auf, was eine entsprechende Auslegung bzw. Optimierung sowohl der zweiten Anschlagselemente 25 als auch der Tragfeder 21 für die jeweilige Aufgabe ermöglicht. Bei weiter zunehmenden Kräften der Schwingungen kommen die beiden zweiten Anschlagelemente 25 mit dem Gehäuse 3 in berührenden Kontakt, wodurch sich mit einem wenig sprunghaften Übergang eine erhöhte Steifigkeit des Getriebelagers 1 erreichen lässt, welche bis ca. 1.200N im Wesentlichen konstant vorliegt, siehe Figur 4.

Ab diesem zweiten Kraftwert kommen nun zwei einander gegenüberliegend in der Längsrichtung X angeordnete erste Anschlagelemente 23 des Einsteckhalters 2, welche an einem Anschlagträger 24 des Einsteckhalters 2 als separate Bauteile feststehend angeordnet sind, zusätzlich mit dem Gehäuse 3 in Kontakt, wodurch sich die Steifigkeit des Getriebelagers1 weiter erhöht, siehe Figur 4. Dies erfolgt ebenfalls wenig sprunghaft. Bei weiterer Erhöhung der Kraft der Schwingungen steigt die Kennlinie ab ca. 1.700 N progressiv an.

Erfindungsgemäß kann hierdurch der Verlauf bzw. die Kennlinie der resultierenden Steifigkeit des Getriebelagers1 über der Kraft weitergehend als bisher bekannt gestaltet werden. Insbesondere können die Übergänge zwischen den einzelnen Bereichen der Kraft kleiner bzw. weniger sprunghaft gehalten werden, was insbesondere der Lebensdauer des Getriebelagers1 zugutekommen kann. Dies kann auf vergleichsweise geringem Bauraum erreicht werden. Auch kann hierdurch das akustische Verhalten des Getriebelagers 1 verbessert werden.

### Bezugszeichenliste (Teil der Beschreibung)

- A: Hauptschwingungsrichtung

- X: Längsrichtung; Tiefe
- Y: Querrichtung; Breite
- Z: vertikale Richtung; Höhe
- X, Y: Horizontalen; horizontale Ebene

- 1: Lager; Motorlager; Getriebelager

- 2: erstes Lagerelement; Innenteil, Einsteckhalter
- 20: Tragarm
- 21: Elastomerkörper; Federelement; Tragfeder
- 22: Stützkörper
- 23: erste Anschlagelemente des ersten Lagerelements 2
- 24: Anschlagträger
- 25: zweite Anschlagelemente des ersten Lagerelements 2

- 3: zweites Lagerelement; Außenteil, Gehäuse
- 30: Lagerkörper; Gehäusekörper
- 31: Durchgangsöffnung für erstes Lagerelement 2

## Patentansprüche

1. Lager (1), vorzugsweise Motorlager (1) oder Getriebelager (1),
mit einem ersten Lagerelement (2) und
mit einem zweiten Lagerelement (3),
wobei das erste Lagerelement (2) einen Elastomerkörper (21) aufweist, welcher das erste Lagerelement (2) und das zweite Lagerelement (3) federnd miteinander verbindet,
wobei das erste Lagerelement (2) wenigstens in einer Hauptschwingungsrichtung (A) wenigstens einseitig wenigstens ein erstes Anschlagelement (23) aufweist,
wobei das erste Lagerelement (2) wenigstens in der Hauptschwingungsrichtung (A) wenigstens einseitig wenigstens ein zweites Anschlagelement (25) aufweist und
wobei das zweite Anschlagelement (25) ein elastomeres Material aufweist, **dadurch gekennzeichnet, dass**
das zweite Anschlagelement (25) und der Elastomerkörper (21) ein unterschiedliches elastomeres Material aufweisen.

2. Lager (1) nach Anspruch 1, **dadurch gekennzeichnet, dass** das zweite Anschlagelement (25) ausgebildet ist, in der Hauptschwingungsrichtung (A) vor dem ersten Anschlagelement (23) dämpfend zu wirken.

3. Lager (1) nach Anspruch 1 oder 2, **dadurch gekennzeichnet, dass** das erste Anschlagelement (23), das zweite Anschlagelement (25) und der Elastomerkörpers (21) ausgebildet sind, so dass, mit ansteigender Kraft, die Steifigkeit des Lagers (2)
• zuerst nur durch den Elastomerkörper (21),
• dann durch den Elastomerkörper (21) und durch das zweite Anschlagelement (25) und
• schließlich durch den Elastomerkörper (21), durch das zweite Anschlagelement (25) und durch das erste Anschlagelement (23)
bestimmt wird.

4. Lager (1) nach Anspruch 1, **dadurch gekennzeichnet, dass** das erste Anschlagelement (23), das zweite Anschlagelement (25) und der Elastomerkörpers (21) ausgebildet sind, so dass, mit ansteigender Kraft, die Steifigkeit des Lagers (2)
• zuerst nur durch den Elastomerkörper (21),
• dann durch den Elastomerkörper (21) und durch das erste Anschlagelement (21) und
• schließlich durch den Elastomerkörper (21), durch das erste Anschlagelement (23) und durch das zweite Anschlagelement (25)
bestimmt wird.

5. Lager (1) nach einem der vorangehenden Ansprüche, **dadurch gekennzeichnet, dass**
das erste Anschlagelement (23) und das zweite Anschlagelement (25) in der Hauptschwingungsrichtung (A) auf derselben Seite des ersten Lagerelements (2) angeordnet sind.

6. Lager (1) nach einem der vorangehenden Ansprüche, **dadurch gekennzeichnet, dass**
das erste Anschlagelement (23) ein elastomeres Material aufweist, vorzugsweise aus einem elastomeren Material besteht.

7. Lager (1) nach Anspruch 6, **dadurch gekennzeichnet, dass**
das erste Anschlagelement (23) und der Elastomerkörper (21) ein unterschiedliches elastomeres Material oder das gleiche elastomere Material aufweisen, vorzugsweise hieraus bestehen.

8. Lager (1) nach Anspruch 6 oder 7, **dadurch gekennzeichnet, dass**
das erste Anschlagelement (23) und der Elastomerkörper (21) eine unterschiedliche oder die gleiche Shore-Härte aufweisen.

9. Lager (1) nach einem der Ansprüche 6 bis 8, **dadurch gekennzeichnet, dass**
das erste Anschlagelement (23) und der Elastomerkörper (21) einstückig ausgebildet sind.

10. Lager (1) nach einem der vorangehenden Ansprüche, **dadurch gekennzeichnet, dass**
das zweite Anschlagelement (25) aus einem elastomeren Material besteht.

11. Lager (1) nach einem der vorangehenden Ansprüche, **dadurch gekennzeichnet, dass**
das zweite Anschlagelement (25) und der Elastomerkörper (21) aus einem unterschiedlichen elastomeren Material bestehen.

12. Lager (1) nach einem der vorangehenden Ansprüche, **dadurch gekennzeichnet, dass**
das zweite Anschlagelement (25) und der Elastomerkörper (21) eine unterschiedliche oder die gleiche Shore-Härte aufweisen.

13. Lager (1) nach einem der vorangehenden Ansprüche, **dadurch gekennzeichnet, dass**
das zweite Anschlagelement (25) und der Elastomerkörper (21) einstückig ausgebildet sind.

14. Lager (1) nach einem der vorangehenden Ansprüche, **dadurch gekennzeichnet, dass**
das erste Anschlagelement (23) und das zweite Anschlagelement (25) ein unterschiedliches elastomeres Material oder das gleiche elastomere Material aufweisen, vorzugsweise hieraus bestehen.

15. Fahrzeug, insbesondere Kraftfahrzeug, mit wenigstens einem Lager (1) nach einem der vorangehenden Ansprüche.

## Claims

1. A bearing (1), preferably a motor bearing (1) or gearbox bearing (1),
having a first bearing element (2) and
having a second bearing element (3),
wherein the first bearing element (2) has an elastomer body (21) which connects the first bearing element (2) and the second bearing element (3) to one another in a resilient manner,
wherein the first bearing element (2) has at least one first stop element (23) on at least one side at least in one main direction of vibration (A),
wherein the first bearing element (2) has at least one second stop element (25) on at least one side at least in the main direction of vibration (A), and
wherein the second stop element (25) has an elastomeric material, **characterized in that**
the second stop element (25) and the elastomer body (21) have a different elastomeric material.

2. The bearing (1) according to claim 1, **characterized in that**
the second stop element (25) is designed to have a damping effect in front of the first stop element (23) in the main direction of vibration (A).

3. The bearing (1) according to claim 1 or 2, **characterized in that**
the first stop element (23), the second stop element (25) and the elastomer body (21) are designed such that, with increasing force, the rigidity of the bearing (2)
• is firstly defined only by the elastomer body (21),
• then by the elastomer body (21) and by the second stop element (25) and
• finally by the elastomer body (21), by the second stop element (25) and by the first stop element (23).

4. The bearing (1) according to claim 1, **characterized in that**
the first stop element (23), the second stop element (25) and the elastomer body (21) are designed such that, with increasing force, the rigidity of the bearing (2)
• is firstly defined only by the elastomer body (21),
• then by the elastomer body (21) and by the first stop element (21) and
• finally by the elastomer body (21), by the first stop element (23) and by the second stop element (25).

5. The bearing (1) according to any one of the preceding claims, **characterized in that**
the first stop element (23) and the second stop element (25) are arranged on the same side of the first bearing element (2) in the main direction of vibration (A).

6. The bearing (1) according to any one of the preceding claims, **characterized in that**
the first stop element (23) has an elastomeric material, preferably consists of an elastomeric material.

7. The bearing (1) according to claim 6, **characterized in that**
the first stop element (23) and the elastomer body (21) have a different elastomeric material or the same elastomeric material, preferably consist of a different or the same material.

8. The bearing (1) according to claim 6 or 7, **characterized in that**
the first stop element (23) and the elastomer body (21) have a different or the same Shore hardness.

9. The bearing (1) according to any one of claims 6 to 8, **characterized in that**
the first stop element (23) and the elastomer body (21) are formed in one piece.

10. The bearing (1) according to any one of the preceding claims, **characterized in that**
the second stop element (25) consists of an elastomeric material.

11. The bearing (1) according to any one of the preceding claims, **characterized in that**
the second stop element (25) and the elastomer body (21) consist of different elastomeric materials.

12. The bearing (1) according to any one of the preceding claims, **characterized in that**
the second stop element (25) and the elastomer body (21) have a different or the same Shore hardness.

13. The bearing (1) according to any one of the preceding claims, **characterized in that**
the second stop element (25) and the elastomer body (21) are formed in one piece.

14. The bearing (1) according to any one of the preceding claims, **characterized in that**
the first stop element (23) and the second stop element (25) have a different elastomeric material or the same elastomeric material, preferably consist of a different or the same material.

15. A vehicle, in particular a motor vehicle, having at least one bearing (1) according to any one of the preceding claims.

## Revendications

1. Palier (1), de préférence palier de moteur (1) ou palier de boîte de vitesses (1),
comportant un premier élément de palier (2) et
comportant un second élément de palier (3),
dans lequel le premier élément de palier (2) présente un corps en élastomère (21), lequel relie de manière élastique le premier élément de palier (2) et le second élément de palier (3) l'un à l'autre,
dans lequel le premier élément de palier (2) présente au moins un premier élément de butée (23) au moins sur un côté dans au moins une direction de vibration principale (A),
dans lequel le premier élément de palier (2) présente au moins un second élément de butée (25) au moins sur un côté dans la direction de vibration principale (A) et dans lequel le second élément de butée (25) présente un matériau élastomère, **caractérisé en ce que**
le second élément de butée (25) et le corps en élastomère (21) présentent un matériau élastomère différent.

2. Palier (1) selon la revendication 1, **caractérisé en ce que**
le second élément de butée (25) est réalisé pour avoir un effet d'amortissement dans la direction de vibration principale (A) avant le premier élément de butée (23).

3. Palier (1) selon la revendication 1 ou 2, **caractérisé en ce que**
le premier élément de butée (23), le second élément de butée (25) et le corps en élastomère (21) sont réalisés de telle sorte que, avec une force croissante, la rigidité du palier (2) est déterminée
• tout d'abord uniquement à travers le corps en élastomère (21),
• puis à travers le corps en élastomère (21) et à travers le second élément de butée (25) et
• finalement à travers le corps en élastomère (21), à travers le second élément de butée (25) et à travers le premier élément de butée (23).

4. Palier (1) selon la revendication 1, **caractérisé en ce que**
le premier élément de butée (23), le second élément de butée (25) et le corps en élastomère (21) sont réalisés de telle sorte que, avec une force croissante, la rigidité du palier (2) est déterminée
• tout d'abord uniquement à travers le corps en élastomère (21),
• puis à travers le corps en élastomère (21) et à travers le premier élément de butée (21) et
• finalement à travers le corps en élastomère (21), à travers le premier élément de butée (23) et à travers le second élément de butée (25).

5. Palier (1) selon l'une quelconque des revendications précédentes, **caractérisé en ce que**
le premier élément de butée (23) et le second élément de butée (25) sont agencés dans la direction de vibration principale (A) du même côté que le premier élément de palier (2).

6. Palier (1) selon l'une quelconque des revendications précédentes, **caractérisé en ce que**
le premier élément de butée (23) présente un matériau élastomère, de préférence est constitué d'un matériau élastomère.

7. Palier (1) selon la revendication 6, **caractérisé en ce que**
le premier élément de butée (23) et le corps en élastomère (21) présentent un matériau élastomère différent ou le même matériau élastomère, de préférence sont constitués de ceux-ci.

8. Palier (1) selon la revendication 6 ou 7, **caractérisé en ce que**
le premier élément de butée (23) et le corps en élastomère (21) présentent une dureté Shore différente ou la même dureté Shore.

9. Palier (1) selon l'une des revendications 6 à 8, **caractérisé en ce que**
le premier élément de butée (23) et le corps en élastomère (21) sont réalisés en une seule pièce.

10. Palier (1) selon l'une quelconque des revendications précédentes, **caractérisé en ce que**
le second élément de butée (25) est constitué d'un matériau élastomère.

11. Palier (1) selon l'une quelconque des revendications précédentes, **caractérisé en ce que**
le second élément de butée (25) et le corps en élastomère (21) sont constitués d'un matériau élastomère différent.

12. Palier (1) selon l'une quelconque des revendications précédentes, **caractérisé en ce que**
le second élément de butée (25) et le corps en élastomère (21) présentent une dureté Shore différente ou la même dureté Shore.

13. Palier (1) selon l'une quelconque des revendications précédentes, **caractérisé en ce que**
le second élément de butée (25) et le corps en élastomère (21) sont réalisés en une seule pièce.

14. Palier (1) selon l'une quelconque des revendications précédentes, **caractérisé en ce que**
le premier élément de butée (23) et le second élément de butée (25) présentent un matériau élastomère différent ou le même matériau élastomère, de préférence sont constitués de ceux-ci.

15. Véhicule, en particulier véhicule automobile, comportant au moins un palier (1) selon l'une quelconque des revendications précédentes.
